(19) Europäisches Patentamt
European Patent Office
Office européen des brevets

(11) **EP 1 445 625 B1**

(12) **EUROPÄISCHE PATENTSCHRIFT**

(45) Veröffentlichungstag und Bekanntmachung des Hinweises auf die Patenterteilung:
**11.07.2007 Patentblatt 2007/28**

(51) Int Cl.:
*G01S 13/87* (2006.01)          *H04Q 7/38* (2006.01)

(21) Anmeldenummer: **03002821.1**

(22) Anmeldetag: **07.02.2003**

(54) **Verfahren zur Positionsbestimmung eines Teilnehmers in einem Funkkommunikationssystem**

Method of determining the position of a user in a radio communication system

Méthode pour déterminer la position d'un utiliseur dans un sytème de communication à radio

(84) Benannte Vertragsstaaten:
**DE FR IT**

(43) Veröffentlichungstag der Anmeldung:
**11.08.2004 Patentblatt 2004/33**

(73) Patentinhaber: **SIEMENS AKTIENGESELLSCHAFT**
**80333 München (DE)**

(72) Erfinder: **Splett, Armin, Dr.**
**89081 Ulm (DE)**

(56) Entgegenhaltungen:
**EP-A- 0 851 239**          **WO-A-99/39219**
**US-A- 5 526 357**          **US-A1- 2003 017 832**

EP 1 445 625 B1

**Beschreibung**

Die Erfindung betrifft ein Verfahren gemäß den Merkmalen des Patentanspruchs 1 zur Positionsbestimmung eines Teilnehmers in einem Funkkommunikationssystem.

Bei Funkkommunikationssystemen sind Anordnungen mit Basisstationen und Antenneneinrichtungen bekannt, bei denen Sendesignale von mehreren Teilnehmern zu einem Sendesummensignal zusammengefasst werden und dieses Sendesummensignal leitungsgebunden von der Basisstation an mindestens zwei räumlich verteilte Antenneneinrichtungen zur Abstrahlung gelangt. Andererseits werden über die Antenneneinrichtungen empfangene Funkempfangssignale von Teilnehmern zu einem Empfangssummensignal zusammengefasst, das leitungsgebunden zur Basisstation übertragen wird.

Bei einer Verwendung von Glasfaserkabeln zur leitungsgebundenen Übertragung werden oben genannte Summensignale im allgemeinen durch analoge Modulation eines Halbleiterlasers erzeugt.

Weiter sind Verfahren zur Positionsbestimmung eines Teilnehmers in einem Mobilfunkkommunikationssystem bekannt, die mit Hilfe von Laufzeitmessungen über Transceiver Positionsbestimmungen eines Teilnehmers durchführen. Beispiele dafür sind auf dem sogenannten "Timing Advance Mechanismus" basierende Positionsbestimmungsverfahren in einem GSM-Mobilfunksystem.

Eine Verwendung eines derartigen Verfahrens ist jedoch im oben beschriebenen Funkkommunikationssystem, bei dem Basisstationen mit räumlich verteilten Antenneneinrichtungen verwendet werden, nicht einsetzbar, da aufgrund von Mehrwegeausbreitungen und aufgrund der Empfangssituation lediglich mehrdeutige Positionsbestimmungen erzielbar sind. Diese Mehrdeutigkeiten wären lediglich unter Einsatz von kostenaufwändigen zusätzlichen Transceivern minimierbar.

Aus US 2003/017832 A1 ist ein Schätzverfahren zur Bestimmung einer "time difference of arrival, TDOA" in einem Funkkommunikationssystem bekannt. Dabei wird ein Satz "cross-correlation values" bereitgestellt, von denen jeder einzelne jeweils einem korrespondierenden TDOA-Schätzwert zugeordnet ist, und von denen jeder einzelne durch cross-correlation eines Referenzsignals mit einem "cooperating signal" bestimmt wird. Das Referenzsignal beinhaltet dabei eine Kopie eines von einer Mobilstation gesendeten Signals, das über eine erste Antenne empfangen wird. Das "cooperating-signal" beinhaltet eine Kopie des gleichen Signals, das über eine zweite Antenne empfangen wird. Mit Hilfe der beiden empfangenen Signale wird dann ein TDOA-Wert für eine durchzuführende Positionsbestimmung ermittelt.

Aus US 5,526,357 ist ein Verfahren bekannt, bei dem zumindest drei Basisstationen eine Kommunikation mit dem "mobile" bzw. mit dem Transponder durchführen. Aus den Kommunikationsverbindungen zu jeder einzelnen der drei Basisstationen werden so genannte "multilateration information" gewonnen.

Es ist daher Aufgabe der vorliegenden Erfindung, ein kostengünstiges Verfahren zur Positionsbestimmung eines gesuchten Teilnehmers in einem Funkkommunikationssystem anzugeben, bei dem einer Basisstation mindestens zwei Antenneneinrichtungen zum Signalempfang zugeordnet sind.

Die Aufgabe der Erfindung wird durch die Merkmale des Patentanspruchs 1 gelöst. Vorteilhafte Weiterbildungen der Erfindung sind in den Unteransprüchen angegeben.

Beim erfindungsgemäßen Verfahren werden bevorzugt Glasfaserkabel zur Signalübertragung verwendet - sowohl sendeseitig als auch empfangsseitig. Aufgrund der sehr geringen Dämpfungswerte sind die individuellen Leitungslängen, bzw. die entsprechend der Erfindung festzulegenden Unterschiede zwischen den Leitungslängen derart wählbar, dass bei guter Signalqualität Mehrdeutigkeiten bei der durchzuführenden Laufzeitmessung vermieden werden.

Beim erfindungsgemäßen Verfahren erfolgt die Positionsbestimmung basierend auf einer sogenannten "Round Trip" Laufzeitmessung, wie sie beispielsweise in "3rd Generation Partnership Project; Technical Specification Group Radio Access Network; Physical Layer - Measurements (FDD), Release 4", 3GPP TS 25.215, v4.5.0 (2002-09), Sektion 5.2.8, oder in "3rd Generation Partnership Project; Technical Specification Group Radio Access Network; Requirements for Support of Radio Resource Management (FDD), Release 4", 3GPP TS 25.133, v4.6.0 (2002-09), Sektion 5.2.8, Sektion 9.2.8 , beschrieben ist.

Dabei wird ein teilnehmerspezifisches Signal beispielsweise von einer Basisstation zu einem Teilnehmer gesendet und von diesem ein Teilnehmersignal zur Bestätigung an die Basisstation zurückübertragen. Bei einer "Round Trip" Laufzeitmessung wird die gesamte Laufzeit dieser Signale zwischen Basisstation und Teilnehmer bestimmt.

Im Folgenden wird ein Ausführungsbeispiel der vorliegenden Erfindung anhand einer Zeichnung näher erläutert. Dabei zeigt:

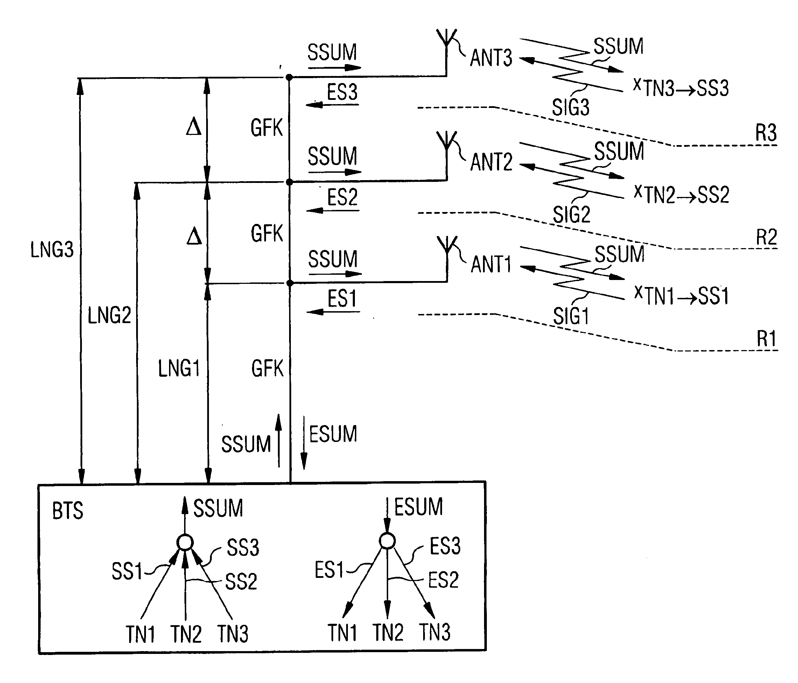

FIG 1    eine Basisstation BTS mit räumlich verteilten Antenneneinrichtungen ANT1 bis ANT3 zur Durchführung der erfindungsgemäßen Positionsbestimmung.

Im Folgenden werden Glasfaserkabel GFK zur Signalübertragung zwischen der Basisstation BTS und den drei Antenneneinrichtunegn ANT1 bis ANT3 verwendet.

Seitens der Basisstation BTS werden Sendesignale SS1 eines ersten Teilnehmers TN1 mit einem Sendesignal SS2 eines zweiten Teilnehmers TN2 und mit einem Sendesignal SS3 eines dritten Teilnehmers TN3 zu einem Sendesummensignal SSUM zusammengefasst. Das Sendesummensignal SSUM gelangt über ein Glasfaserkabel GFK an alle drei Antenneneinrichtungen ANT1 bis ANT3 zur Abstrahlung.

Dabei ist einer ersten Antenneneinrichtung ANT1 beispielsweise in einem Indoor-Funkkommunikationssystem ein erster Raum R1 eines Gebäudes G zur Funkversorgung zugewiesen, in dem sich der erste Teilnehmer TN1 aufhält. Entsprechend werden einer zweiten bzw. einer dritten Antenneneinrichtung ANT2 bzw. ANT3 ein zweiter bzw. ein dritter Raum R2 bzw. R3 zur Funkversorgung des zweiten bzw. dritten Teilnehmers TN2 bzw. TN3 zugewiesen.

Seitens der Teilnehmer TN1 bis TN3 wird das über die Antenneneinrichtungen ANT1 bis ANT3 abgestrahlte Sendesummensignal SSUM empfangen und teilnehmerspezifisch aus dem Sendesummensignal SSUM das für den jeweiligen Teilnehmer TN1 bis TN3 bestimmte Sendesignal SS1 bis SS3 ermittelt.

Entsprechend werden von den Teilnehmern TN1 bis TN3 abgestrahlte Signale SIG1 bis SIG3 über die jeweils den Teilnehmern TN1 bis TN3 zugeordneten Antenneneinrichtungen ANT1 bis ANT3 als Empfangssignale ES1 bis ES3 empfangen und zu einem Empfangssummensignal ESUM zusammengefasst. Das Empfangssummensignal gelangt wiederum über ein Glasfaserkabel GFK zur weiteren Verarbeitung zur Basisstation BTS.

Sowohl die sendeseitige als auch die empfangsseitige Summensignalübertragung erfolgt besonders vorteilhaft mit Hilfe einer gemeinsamen Verbindungsleitung.

Für jede einzelne Antenneneinrichtung ANT1 bis ANT3 werden nun individuelle Leitungslängen LNG1 bis LNG3 derart gewählt, dass basierend auf einer teilnehmerspezifisch durchgeführten Round-Trip-Laufzeitmessung eine dem jeweiligen Teilnehmer TN1 bis TN3 zugeordnete Antenneneinrichtung ANT1 bis ANT3 eindeutig bestimmt werden kann.

Eine eindeutige Bestimmung ist beispielsweise möglich, indem ein Längenunterschied $\Delta(i)$ zwischen individuellen Leitungslängen LNG(i+1) und LNG(i) benachbarter Antenneneinrichtungen ANT(i+1) und ANT(i) anhand folgender Formeln gewählt wird:

$$\Delta = LNG(i+1) - LNG(i) \geq Const,$$

mit

$$Const = r*v/c$$

mit

i      als Laufvariable zur Kennzeichnung einer einer i-ten Antenneneinrichtung zugeordneten Leitungslänge LNG,
r      als Reichweite eines Funkversorgungsbereichs,
v =     $2*10E8$ m/s als Glasfaser-Gruppengeschwindigkeit, und
c =     $3*10E8$ m/s als Gruppengeschwindigkeit in Luft.

Beispielsweise wird eine Leitungslänge LNG(i) eines i-ten Kabels gewählt zu:

$$LNG(i) = i * Const$$

Wenn für eine Signallaufzeit t gilt:

$$2*i*Const/v < t < 2*(i+1)*Const/v$$

werden Mehrdeutigkeiten bei der durchzuführenden Laufzeitmessung vermieden und ein Teilnehmer kann einer i-ten Antenneneinrichtung eindeutig zugeordnet werden.

Unter der Annahme, dass eine maximale Zellgröße als Reichweite einer Antenneneinrichtung beispielsweise bei r=300 m liegt, ergibt sich nach oben genannter Formel für Zuleitungskabel benachbarter Antenneneinrichtungen ein

minimal erforderlicher Längenunterschied

$$\Delta(i) = LNG(i+1)-LNG(i) \geq Const$$

$$\Delta(i) \geq 200m.$$

Ein Glasfaserkabel weist typische Dämpfungswerte von ca. 0,2 dB/km auf, so dass eine Verlegung von zusätzlichen Leitungslängen kein Dämpfungsproblem verursacht.

Für die erste Antenneneinrichtung ANT1 wird eine Glasfaserkabelstrecke mit folgender individueller Zuleitungslänge LNG1 gewählt:

$$LNG1 = 600 \ m$$

Für die zweite und die dritte Antenneneinrichtung ANT2, ANT3 ergeben sich Glasfaserkabelstrecken mit den individuellen Zuleitungslängen LNG2 und LNG3:

$$LNG3 = LNG2 + \Delta = 1000 \ m$$

$$LNG2 = LNG1 + \Delta = 800 \ m.$$

Stellvertretend betrachtet wird für den ersten Teilnehmer TN1 eine Round-Trip-Laufzeitmessung durchgeführt und, basierend auf den durch die Längenunterschiede der Glasfaserkabelstrecken bedingten Laufzeitunterschieden, die erste Antenneneinrichtung ANT1 als dem ersten Teilnehmer TN1 zugeordnete Empfangsantenne ermittelt.

Damit ergibt sich als Position des ersten Teilnehmers TN1 der der ersten Antenneneinrichtung ANT1 zur Funkversorgung zugeordnete Raum R1.

Typischerweise werden verteilte Antenneneinrichtungen zur Funkversorgung sogenannter Piko-Funkzellen innerhalb eines Indoor-Funkkommunikationssystems verwendet.

**Patentansprüche**

1.  Verfahren zur Positionsbestimmung eines Teilnehmers in einem Funkkommunikationssystem,

- bei dem Sendesignale von Teilnehmern zu einem Sendesummensignal zusammengefasst werden, das leitungsgebunden von einer Basisstation an mindestens zwei Antenneneinrichtungen zur Abstrahlung gelangt,
- bei dem über die mindestens zwei Antenneneinrichtungen empfangene Empfangssignale von Teilnehmern zu einem Empfangssummensignal zusammengefasst werden, das leitungsgebunden zur Basisstation gelangt,

**dadurch gekennzeichnet,**

- **dass** jeder einzelnen Antenneneinrichtung jeweils ein individueller Bereich zur Funkversorgung der dortigen Teilnehmer zugeordnet wird,
- **dass** zur Signalübertragung verwendete Leitungslängen für jede Antenneneinrichtung derart individuell gewählt werden, dass mit Hilfe einer auf dem Sendesignal und Empfangssignal eines gesuchten Teilnehmers basierenden Round-Trip-Laufzeitmessung eine Antenneneinrichtung ermittelt wird, über die das Empfangssignal eines gesuchten Teilnehmers empfangen wird, und
- **dass** über den der ermittelten Antenneneinrichtung zugeordneten funkversorgten Bereich die Position des gesuchten Teilnehmers ermittelt wird.

**2.** Verfahren nach Anspruch 1, **dadurch gekennzeichnet, dass** die Leitungslängen mittels einer optische Verbindungsleitung bzw. Glasfaserleitung realisiert werden.

**3.** Verfahren nach Anspruch 2, **dadurch gekennzeichnet, dass** Leitungslängenunterschiede Δ zwischen benachbarten Antenneneinrichtungen zugeordneten Leitungslängen anhand der Formeln:

$$\Delta = LNG(i+1) - LNG(i) \geq Const,$$

mit

$$Const = r*v/c$$

bestimmt werden, mit:

i als Laufvariable zur Kennzeichnung einer einer i-ten Antenneneinrichtung zugeordneten Leitungslänge LNG,
r als Reichweite eines Funkversorgungsbereichs,
v = 2*10E8 m/s als Glasfaser-Gruppengeschwindigkeit, und
c = 3*10E8 m/s als Gruppengeschwindigkeit in Luft.

**4.** Verfahren nach einem der vorhergehenden Ansprüche, **dadurch gekennzeichnet, dass** das Funkkommunikationssystem als Indoor-Funkkommunikationssystem verwendet wird und jede Antenneneinrichtung jeweils einen ihr zugeordneten Gebäudebereich funkversorgt.

**5.** Verfahren nach einem der vorhergehenden Ansprüche, **dadurch gekennzeichnet, dass** die sendeseitige und die empfangsseitige Summensignalübertragung mit Hilfe einer gemeinsamen Verbindungsleitung durchgeführt wird.

**Claims**

**1.** Method for determining the position of a subscriber in a radio communication system by which

- transmission signals from subscribers are combined into a composite transmission signal which is transmitted over cables from a base station to at least two spatially separated antenna equipment sets for radiation,
- the reception signals which are received from subscribers via the two or more antenna equipment sets are combined into one composite reception signal, which is transmitted over cables to the base station,

**characterized in that**

- each individual antenna equipment set is assigned one individual area to which it is to provide radio coverage for the subscribers within it,
- the lengths of the cables used for signal transmission for each antenna equipment set are chosen individually in such a way that, on the basis of a round-trip propagation time measurement for the transmission signal and the reception signal for a subscriber who is to be found, a determination is made of the antenna equipment set via which the reception signal from the subscriber who is being sought was received, and
- the position of the subscriber who is being sought is determined from the area which is supplied with radio coverage by the antenna which has been determined.

**2.** Method in accordance with claim 1
**characterized in that**
the cable lengths are realized by means of an optical cable or glass fibre cable.

**3.** Method in accordance claim 2
**characterized in that**
differences Δ in cable lengths between the cable lengths assigned to neighbouring antenna equipment sets are determined using the formula:

$$\Delta = \text{LNG}(i+1)-\text{LNG}(i) \geq \text{Const},$$

where

$$\text{Const} = r*v/c$$

where

i is a sequential index identifying the cable length LNG assigned to the ith antenna equipment set,
r is the range of a radio coverage area,
v = 2*10E8 m/s is the group velocity in glass fibre, and
c = 3*10E8 m/s is the group velocity in air.

4. Method in accordance with one of the preceding claims
**characterized in that**
the radio communication system is used as an indoor radio communication system, and each antenna equipment set provides radio coverage to one area of the building which is assigned to it.

5. Method in accordance with one of the preceding claims
**characterized in that**
the transmission of the composite signals on the transmission side and on the receiving side are effected using a common link cable.

**Revendications**

1. Procédé pour déterminer la position d'un abonné dans un système de communication radio,

   - dans lequel des signaux d'émission d'abonnés sont regroupés en un signal d'émission cumulé parvenant par le biais de lignes d'une station de base à au moins deux dispositifs d'antenne pour émission,
   - dans lequel des signaux de réception d'abonnés reçus par l'intermédiaire desdits deux dispositifs d'antenne sont regroupés en un signal cumulé de réception parvenant par le biais de lignes à la station de base,

   **caractérisé en ce que**

   - on associe à chaque dispositif d'antenne distinct à chaque fois une zone individuelle pour la couverture radio des abonnés de ce lieu,
   - on choisit individuellement, pour chaque dispositif d'antenne, des longueurs de ligne utilisées pour la transmission du signal de manière à détecter, à l'aide d'une mesure du temps de propagation en boucle basée sur le signal d'émission et le signal de réception d'un abonné recherché, un dispositif d'antenne par l'intermédiaire duquel le signal de réception d'un abonné recherché est reçu, et
   - on détermine la position de l'abonné recherché par l'intermédiaire de la zone de couverture radio associée au dispositif d'antenne détecté.

2. Procédé selon la revendication 1, **caractérisé en ce qu'**on réalise les longueurs de ligne au moyen d'une ligne de connexion optique resp. une ligne en fibres de verre.

3. Procédé selon la revendication 2, **caractérisé en ce qu'**on détermine des différences de longueur de ligne Δ entre longueurs de ligne associées à des dispositifs d'antenne voisins à l'aide des formules :

$$\Delta = \text{LNG}(i+1)-\text{LNG}(i) \geq \text{Const},$$

avec

$$\text{Const} = r*v/c$$

avec :

i comme grandeur réglée pour caractériser une longueur de ligne LNG associée à un i-ième dispositif d'antenne,
r comme portée d'une zone de couverture radio,
v = 2*10E8 m/s comme vitesse de groupe des fibres de verre, et
c = 3*10E8 m/s comme vitesse de groupe dans l'air.

**4.** Procédé selon l'une des revendications précédentes, **caractérisé en ce que** le système de communication radio est utilisé comme système de communication radio indoor et **en ce que** chaque dispositif d'antenne assure la couverture radio à chaque fois d'une zone de bâtiment qui lui est associée.

**5.** Procédé selon l'une des revendications précédentes, **caractérisé en ce que** la transmission du signal cumulé côté émission et côté réception est effectuée à l'aide d'une ligne de connexion commune.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003017832 A1
- US 5526357 A